Europäisches Patentamt

European Patent Office

Office européen des brevets

(19)

(11) Numéro de publication: **0 135 425**
**A1**

(12) # DEMANDE DE BREVET EUROPEEN

(21) Numéro de dépôt: **84401614.7**

(51) Int. Cl.⁴: **B 62 K 19/02**

(22) Date de dépôt: **01.08.84**

(30) Priorité: **02.08.83 FR 8312929**

(43) Date de publication de la demande:
**27.03.85 Bulletin 85/13**

(84) Etats contractants désignés:
**AT BE CH DE FR GB IT LI LU NL SE**

(71) Demandeur: **MANUFACTURE INDUSTRIELLE DE CYCLES ET MOTOCYCLES MICMO**
**Rue M. Brunelière**
**F-44270 Machecoul(FR)**

(72) Inventeur: **Menard, Maurice**
**15, rue Marat**
**F-78210 St.-Cyr l'Ecole(FR)**

(72) Inventeur: **Redois, Joel**
**Le Grand Etang**
**F-44270 Machecoul(FR)**

(74) Mandataire: **Phélip, Bruno et al,**
**c/o Cabinet Harlé & Phélip 21, rue de la Rochefoucauld**
**F-75009 Paris(FR)**

(54) **Nouveau procédé de fabrication de cadres et de fourches de direction de cycles et produits en découlant.**

(57) Procédé de fabrication d'un ensemble de cadre/fourche de direction de cycles dans le but d'en améliorer le rendement aérodynamique, consistant à réaliser les fourreaux de fourche de direction 1 le tube diagonal 2, le tube de selle 3, les haubans de fourche arrière 4, ainsi qu'éventuellement la douille de direction 7, à partir de tubes profilés de section convexe dont le maître-couple se situe sensiblement au tiers de la distance séparant les deux extrémités de la dite section, et à assembler ces tubes de telle sorte que, face au sens d'écoulement de l'air ceux-ci soient disposés, le bord aminci vers l'avant, le bord le plus épais vers l'arrière, le tube horizontal 5 et les bases 6 de la fourche arrière du cadre étant réalisés à partir de profilés de section elliptique dont la grand axe est disposé horizontalement afin de conférer au cadre une meilleure inertie transversale.

L'invention s'applique à tous les cycles et plus particulièrement aux cycles de compétition sur route et sur piste.

./...

section BB

section DD

section CC

section EE

Pl. unique

section AA

1

**Nouveau procédé de fabrication de cadres et de four-**
**ches de direction de cycles et produits en découlant.**

La présente invention concerne un procédé de
fabrication de cadres de cycles et plus particulièrement de cadres de bicyclettes de sport et de compétition, en vue d'améliorer le rendement aérodynamique.

Jusqu'ici, les perfectionnements apportés aux
cycles ont porté sur le profilage du cadre, de la
fourche de direction ainsi que sur les accessoires,
tels que les organes de direction, les commandes des
dispositifs de freinage ou de changement de vitesse,
les roues, etc.... C'est ainsi qu'il a déjà été
réalisé des cadres dont les éléments tubulaires
les constituant avaient une section profilée ; de
même des perfectionnements du même genre ont été
apportés dans la conception du guidon. Les câbles
de freins et du dispositif de changement de vitesse
ont été logés à l'intérieur des éléments tubulaires
du cintre du guidon et du cadre : la recherche d'une
meilleure pénétration du cycle dans l'air a porté
sur la réduction du maître-couple de celui-ci ;
à ce titre, les roues ont été réalisées selon un
profil de jante, de section réduite appropriée,
à l'intérieur duquel se logent les écrous de
serrage des rayons, ces derniers étant même parfois
de section elliptique. De tels aménagements ont
permis de réduire d'environ 50 % la puissance
absorbée par l'équipage cycle/coureur, ladite puissance étant initialement de l'ordre de 580 watts
à la vitesse de 50 km/heure, répartie à raison d'un
tiers pour le cycle seul, et deux tiers pour le
coureur.

Le procédé suivant l'invention vise a améliorer
le rendement aérodynamique du cycle tout en conférant à l'ensemble cadre/fourche une résistance
mécanique suffisante.

Dans le cadre de la recherche menée par la

7642 EU

Société déposante de la présente demande, il a été entrepris des essais en soufflerie sur des cadres et des fourches de direction réalisés à partir de tubes de différentes provenances et de section profilée sensiblement différente, ces cadres étant dépourvus de guidon et de selle. Les comparaisons ont été effectuées en prenant comme référence un cadre conventionnel exécuté en tube d'acier allié dont la composition chimique est la suivante :

C 0,23-0,29 % ; Si 0,15-0,35 % ; Mn 1,25-1,45 %; S 0,045 % ; P 0,045 % ; Mo 0,15-0,25 % donnant les caractéristiques mécaniques suivantes :

Résistance à la traction : R 772 N/mm² Limite élastique        : E 695 N/mm² Allongement             : A 10 %

On sait que la puissance nécessaire pour vaincre la résistance de l'air est déterminée à l'aide de la formule : $W = \rho/2\ SCx\ Vo^3$

dans laquelle : $\rho$ correspond à la masse volumique de l'air en kg/m³,

Vo est la vitesse considérée en m/s, SCx désigne le coefficient de pénétration dans l'air exprimé en m².

La puissance totale à fournir par le coureur pour rouler à 50 km/h estimée à 580 watts, tient compte de la résistance au roulement.

Dans les tableaux qui suivent, le gain apporté par la modification de forme et exprimé en mètre par heure de course est indiqué par l'abréviation Gm.

$\Delta W$ représente le gain de puissance en watts.

Le gain de temps exprimé en secondes par heure de course est indiqué par l'abréviation Gt.

Ces essais ont donné pour résultat : .

| Type de cadre | SCx (m²) | W (watts) | ΔW (watts) | Gm (m/h) | Gt (seconde/h) |
|---|---|---|---|---|---|
| Cadre normal | 0,04201 | 68,93 | | | |
| N°1 | 0,03173 | 52,066 | 16,864 | 494 | 35,5 |
| N°2 | 0,03457 | 56,732 | 12,198 | 355 | 25,55 |
| N°3 | 0,02803 | 46 | 22,93 | 676 | 48,67 |
| N°4 cadre et fourche profil) | 0,02377 | 39 | 29,93 | 890 | 64,07 |
| N°5 cadre et fourche profil | 0,02287 | 37,532 | 31,39 | 935 | 67,315 |

0135425

Dans ce tableau les codes 1, 2 et 3 correspondent à des réalisations à partir d'acier ou d'alliage dont les composition et caractéristiques mécaniques sont les suivantes :

Cadre 1 : composition : acier fin nuance XC 35; C 0,32-0,38 % ; Mn 0,5-0,8 % ; Si 0,10-0,40 % ; Cr 0,10 ; Ni 0,10 ; Mo 0,10 donnant les caractéristiques R 800 N/mm² ; E 730 N/mm² ; A 14 à 18 %;

Cadre 2 : composition : alliage léger d'aluminium nuance Alu 5086 AG 4 MC donnant les caractéristiques ; 5 R 363 N/mm² ; E 258 N/mm² ; A 13 %.

Cadre 3 : composition : acier ou chrome molybdène nuance 25 CD 4, donnant les caractéristiques R 850 à 950 N/mm² ; E 750 N/mm² ; A 10 %.

Un tel tableau permet de démontrer l'efficacité du profilage des tubes par rapport à un tube cylindrique.

Le montage de mesure de trainée des cadres a été utilisé pour déterminer celle des éléments constituant les cadres tels que le tube horizontal, le tube diagonal, le tube de selle et les haubans. Les essais ont porté notamment sur un élément de tube incliné à 18° par rapport à la verticale, s'apparentant à un tube de selle : afin de pouvoir établir des comparaisons, ces essais ont été effectués sur :

- un tube de section circulaire ∅ 28
- un tube profilé 20 x 40

Ces tubes ont été placés en soufflerie selon deux positions d'inclinaison par rapport à la verticale : d'une part en configuration normale, les tubes inclinés à 18° vers l'arrière, appelée "flèche arrière" et d'autre part en configuration retournée à 18° vers l'avant appelée "flèche avant".

5

Par ailleurs, la section goutte d'eau ou aile d'avion a été placée de deux façons différentes par rapport au sens d'écoulement de l'air ; en position normale, le bord d'attaque en avant, et en position inversée le bord de fuite en avant.

Les résultats de ces essais sont donnés par le tableau qui suit :

| Essais n° | Configurations d'essais | SCx (m²) | W (watts) |
|---|---|---|---|
| 1 | Tube à section circulaire Ø 28 (flèche arrière) | 0,01788 | 29,332 |
| 2 | Tube à section circulaire Ø 28 (flèche avant) | " | " |
| 3 | Tube profil 20 x 40 (flèche arrière) | 0,01203 | 19,733 |
| 4 | Tube profil 20 x 40 (flèche avant) | 0,01008 | 16,54 |

Les variations obtenues entre les essais 3 et 4 pouvant être dues à des dispositions différentes du tube dans la soufflerie (flèche arrière et flèche avant), il a été procédé à des mesures sur des éléments de tube profil 20 x 40 disposés perpendiculairement à l'écoulement, c'est-à-dire en l'absence de toute flèche.

Le coefficient de pénétration dans l'air Cx, relevé dans le cas d'une disposition normale du profil par rapport au sens d'écoulement de l'air, c'est-à-dire bord d'attaque en avant, et dans le cas d'une disposition inversée, a été respectivement 0,93509 et 0,71289.

De même, il a été procédé à des essais sur des fourches de direction équipées ou non de roue

6

avant qui ont donné :

- formule profilée seule : position normale :
  W - 12,7 watts,
  position inversée : W - 9,02 watts,
- formule profilée + roue : position normale :
  W = 27 watts,
  position inversée : W = 20 watts.

En conclusion, pour des vitesses d'écoulement de l'ordre de 50 km/heure et les sections employées, le tube profil disposé en position inverse de la position usuelle permet une réduction de trainée supérieure à 20 % pour l'ensemble du cadre.

De ces essais, il résulte que le nouveau procédé de réalisation du cadre de cycle consiste à inverser les profils du tube de selle, du tube diagonal, des haubans arrière en plaçant pour chacun d'eux la partie la plus mince du profil vers l'avant. Complémentairement et dans le but d'améliorer la rigidité en torsion du cadre, le tube horizontal de celui-ci est de section elliptique dont le grand diamètre est disposé horizontalement.

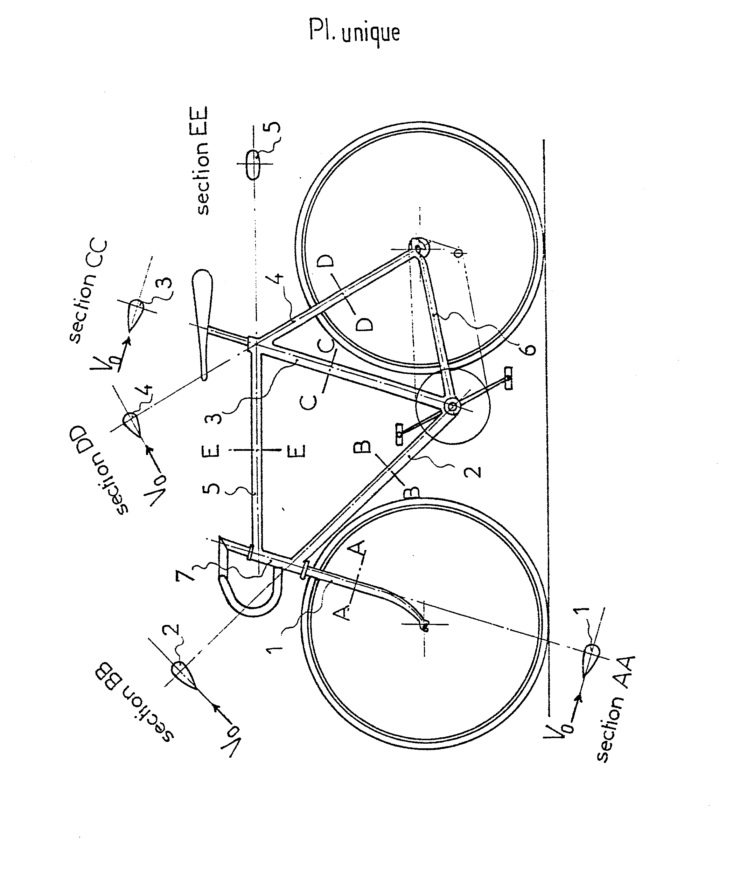

Le dessin annexé illustre à titre d'exemple non limitatif un mode de réalisation d'un cycle équipé d'un cadre et d'une fourche de direction conformes à la présente invention. Celui-ci représente une vue en élévation de l'ensemble et :

- une section AA des fourreaux de la fourche de direction 1,
- une section BB du tube diagonal 2 du cadre,
- une section CC du tube de selle 3 du cadre,
- une section DD des haubans de fourche arrière 4 du cadre,
- une section EE du tube horizontal 5 du cadre.

7

Pour une meilleure interprétation du dessin, les sections ont été représentées à une échelle plus grande que celle de l'ensemble du cycle.

Tel que représenté, les fourreaux de fourche 1, le tube diagonal 2, le tube de selle 3 et les haubans de la fourche arrière 4 sont réalisés au moyen de profilés creux dont la section droite est de forme convexe dont les flancs se raccordent sur l'axe de symétrie par des arrondis de rayons différents de manière à constituer un bord épais et un bord aminci, telle que la forme ovoïde, la forme goutte d'eau ou la forme dont le maître-couple se situe sensiblement au tiers de la distance séparant les deux extrémités de ladite section droite. Tel que précisé sur le dessin et en se reportant aux sections des tubes précités, la caractéristique principale de l'invention réside dans la position occupée par le profil de chacune de ces sections par rapport au sens d'écoulement de l'air matérialisé, par le vecteur Vo, c'est-à-dire le bord aminci vers l'avant, le bord le plus épais vers l'arrière. Les bases 6 de la fourche arrière disposées sensiblement horizontales n'intervenant que très peu dans la résistance à la pénétration dans l'air, peuvent être réalisées en profilés de toute section, circulaire ou profilée, ladite section étant, selon une disposition déjà connue, décroissante de l'axe du pédalier à la queue de fourche ou extrémité arrière de la base.

Le tube horizontal 5 du cadre est constitué d'un profilé creux de section elliptique dont le grand diamètre est placé horizontalement de façon à obtenir une meilleure inertie transversale, augmentant ainsi la rigidité en torsion du cadre, cette disposition permettant de plus une mise en place
plus facile de la cuvette supérieure du roulement
de direction. Pour la même raison de rigidité,
les bases 6 peuvent être également de section
elliptique décroissante, disposées comme le tube
horizontal, le grand diamètre en position horizontale.

Dans la mesure des possibilités de montage
du pivot de direction, la douille de direction
7, reliant à l'avant du cadre, le tube horizontal
5 et le tube diagonal 2, peut être réalisée à
lisée à l'aide d'un profil selon l'invention et
disposé en position inverse, bord aminci vers
l'avant.

L'invention s'applique à tous les cycles et
plus particulièrement aux cycles de compétition,
sur route et sur piste.

9

## REVENDICATIONS

1. Procédé de fabrication d'un ensemble cadre/fourche de directions de cycles et plus particulièrement de cycles de compétition sur route ou sur piste, en vue d'en améliorer le rendement aérodynamique tout en conférant audit ensemble une résistance mécanique suffisante, caractérisé en ce qu'il consiste à réaliser les différents éléments constitutifs de l'ensemble au moyen de profilés creux dont la section droite est de forme convexe dont les flancs se raccordent sur l'axe de symétrie par des arrondis de rayons différents de manière à constituer un bord épais et un bord aminci, telle que la forme ovoïde, la forme goutte d'eau, ou toute forme dont le maître-couple se situe sensiblement au tiers de la distance séparant les deux extrémités de la section droite, lesquels profilés sont assemblés pour réaliser l'ensemble cadre/fourche de direction de façon telle que leur section soit disposée face au sens d'écoulement de l'air, le bord aminci vers l'avant, le bord le plus épais vers l'arrière, la rigidité transversale du cadre étant assurée par l'utilisation de profilés de section elliptique pour la réalisation des éléments constitutifs disposés horizontalement ou sensiblement horizontaux dans la structure du cadre, le plus grand diamètre de la section étant situé horizontalement.

2. Ensemble cadre/fourche, obtenu par la mise en oeuvre du procédé selon la revendication 1, caractérisé ence que : les fourreaux de fourche de direction (1), le tube diagonal (2), le tube de selle (3) et les haubans de fourche arrière (4) ainsi qu'éventuellement la douille de direction (7) sont réalisés à partir de tubes profilés de section convexe et assemblés de telle sorte que face au sens d'écoulement de l'air, ceux-ci soient disposés le bord aminci vers l'avant, le bord plus épais vers l'arrière.

3. Cadre de cycle, obtenu par la mise en oeuvre du procédé selon l'invention 1, caractérisé en ce que le tube horizontal (5) du cadre est réalisé à partir d'un tube profilé de section elliptique dont le plus grand diamètre est disposé horizontalement de façon à conférer audit cadre une meilleure inertie transversale.

4. Cadre de cycle, obtenu par la mise en oeuvre du procédé selon la revendication 1, caractérisé en ce que les bases 6 de la fourche arrière peuvent être réalisées à partir de tubes profilés, de section elliptique dont le plus grand diamètre est disposé horizontalement de façon à conférer audit cadre une meilleure inertie transversale, ladite section étant décroissante, de l'axe du pédalier à l'extrémité arrière des bases.

section EE

section CC

section DD

section BB

section AA

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| Y | GB-A- 318 386 (EVANS) <br> * en entier * | 1,3 | B 62 K 19/02 |
| A |  | 2 |  |
| Y | --- <br> GB-A-1 086 638 (MOULTON CONSULTANTS LTD.) <br> * en entier * | 1 |  |
| A |  | 2 |  |
| A | --- <br> FR-A- 884 808 (BARRA) <br> * en entier * | 1-4 |  |
| A | --- <br> CH-A- 266 540 (COMPAGNIE NOUVELLE DES CYCLES HURTU) <br> * en entier * | 1-4 | DOMAINES TECHNIQUES RECHERCHES (Int. Cl.4) <br><br> B 62 K |
| A | --- <br> FR-A- 864 069 (GIORDANI) <br> * en entier * | 1,2 |  |
| A | --- <br> GB-A- 199 369 (DAIMLER-MOTOREN GESELLSCHAFT) <br> * en entier * | 1,2 |  |
| A | --- <br> FR-A-2 497 756 (RAKOVER) <br> * figures * | 1 |  |
|  | ---     -/- |  |  |

Le présent rapport de recherche a été établi pour toutes les revendications

| Lieu de la recherche | Date d'achèvement de la recherche | Examinateur |
|---|---|---|
| LA HAYE | 31-10-1984 | FRANKS B.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

<table>
<tr><td>Office européen des brevets</td><td>RAPPORT DE RECHERCHE EUROPEENNE</td></tr>
</table>

| DOCUMENTS CONSIDERES COMME PERTINENTS | | | |
|---|---|---|---|
| Categorie | Citation du document avec indication, en cas de besoin, des parties pertinentes | Revendication concernée | CLASSEMENT DE LA DEMANDE (Int. Cl 4) |
| A | FR-A- 867 971 (CHICHERY) <br> * figures * | 1 | |

-----

**DOMAINES TECHNIQUES RECHERCHES (Int. Cl.4)**

Le présent rapport de recherche a été établi pour toutes les revendications

| Lieu de la recherche <br> LA HAYE | Date d'achèvement de la recherche <br> 31-10-1984 | Examinateur <br> FRANKS B.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82